# EUROPEAN PATENT APPLICATION

(11) **EP 1 271 858 A1**
(43) Date of publication of application: **02.01.2003**
(21) Application number: 01440184.8
(22) Date of filing: 21.06.2001
(51) Int. Cl.: H04L 12/56

(54) **Method and system for editing or displaying a message**

(71) Applicant: ALCATEL, 75008 Paris (FR)
(72) Inventor: Diebolt, Frank, 67400 Illkirch (FR); Simon, Cédric, 67400 Illkirch (FR); Marchand, Jean-Philippe, 67640 Fegersheim (FR); Villars, Sébastien, 67400 Illkirch (FR)
(74) Representative: Menzietti, Domenico, Dipl.-Ing

(57) **Abstract**

The present invention concerns a method and a system for editing or displaying a message or a document stored in a Unified Messaging system, by a subscriber of said system using its wireless or cellular phone having a radio interface and GSM, GPRS and/or UMTS communication capacity.

Method characterised in that it consists in establishing with said phone (2) a local radio communication link (3) with a radio compliant editing or display unit (4) and a remote communication link (5) with the Unified Messaging system (1) through a GSM/GPRS/UMTS network (5'), transmitting the concerned message or document in an adequate format through the two previous links (3 and 5) to said unit, and displaying or editing said message or document on said unit (4).

## Description

The present invention relates to the field of edition of documents or messages, in particular e-mails and faxes, by the receiver when this latter is not in his normal environment, in particular in terms of editing equipment, and concerns a method and a system for displaying or editing a message or a document in said conditions.

A Unified Messaging System (UMS) is an information system mixing electronic mails, voice messages and faxes in a unique container. The different kind of messages can be handled by a client software on a PC (such as the one known as "Outlook") or by the phone through the so-called TUI (Telephone User Interface) allowing message access be every kind of phone like a standard phone, a GSM, a WAP supporting GSM or a telephone aware personal assistant.

Even if each message type has a most convenient way of access, a nearly full access is granted to the information by using various technologies such as "Text to Speech" to listen to emails, deliver an email or a fax on a fax machine, sending an email and every other kind of electronic document such as a fax and other features.

Among well-known unified messaging systems, one can mention the systems known as "AUM" (Alcatel Unified Messaging) by the applicant, "Unity" by Active Voice or "Unified Messenger" by Lucent.

For a subscriber of such a Unified Messaging system, the messages can be accessed via his phone and the printing of his faxes and his e-mails from his inbox is an available option. If he checks his inbox with a DECT phone or his GSM corporate, he may want to print those mails not on his current defined printer but on the nearest printer. The problem here is the retrieval of the suitable and closest printer.

According to the inventors' knowledge, the best known solution is to define a fixed list of printers (available through the network) and to choose from the TUI (Telephony User Interface) the one which is the closest from his current location.

Nevertheless, this solution is only valid inside the subscriber's company. It is not available beyond the limits of his company knowing that his printer is a networked printer.

If for example, the concerned subscribers are marketing people visiting their customers, they may want to print some of their e-mails or faxes at the customers' offices.

But when the networks of the two companies are not linked, the printers of the customers' companies can not be reached by the UMS to which the marketing people belong and they are not able to print their e-mails and faxes.

Thus, this best existing solution is limited to the company network having a Unified Messaging System.

The main purpose of the invention is to overcome these previous limitations.

To that end, the present invention concerns a method for editing or displaying a message or a document stored in a Unified Messaging system, by a subscriber of said system using its wireless or cellular phone having a radio interface and GSM, GPRS and/or UMTS communication capacity, characterised in that it consists in establishing with said phone a local radio communication link with a radio compliant editing or display unit and a remote communication link with the Unified Messaging system through a GSM/GPRS/UMTS network, transmitting the concerned message or document in an adequate format through the two previous links to said unit, and displaying or editing said message or document on said unit.

The present invention also concerns a system suitable for editing or displaying a message or a document stored in a Unified Messaging system server, by a subscriber of this latter system, by means of its wireless or cellular phone having a radio interface and GSM, GPRS and/or UMTS communication capacity, characterised in that said phone is linked, on the one hand, with a local radio compliant editing or display unit through a local radio communication link and, on the other hand, with the Unified Messaging system server through a GSM/GPRS/UMTS network, the message or document to be displayed or edited being transmitted in an adequate format through the two previous links to said unit.

The present invention will be better understood thanks to the following description and drawings of an embodiment of said invention given as a non limitative example thereof.

Figure 1 is a timing diagram showing the consecutive operations executed when applying the method according to an embodiment of the invention.

Figure 2 is a shematic view of a system according to the invention, able to put into practice the inventive method.

Said method is a method for editing or displaying a message or a document stored in a Unified Messaging system 1, by a subscriber of said system using its wireless or cellular phone 2 having a radio interface and GSM, GPRS and/or UMTS communication capacity.

According to the invention, said method mainly consists in establishing via said phone 2 a local radio communication link 3 with a radio compliant editing or display unit 4 and a remote communication link 5 with the Unified Messaging system 1 through a GSM/GPRS/UMTS network 5', transmitting the concerned message or document in an adequate format through the two previous links 3 and 5 to said unit 4, and displaying or editing said message or document on said unit 4.

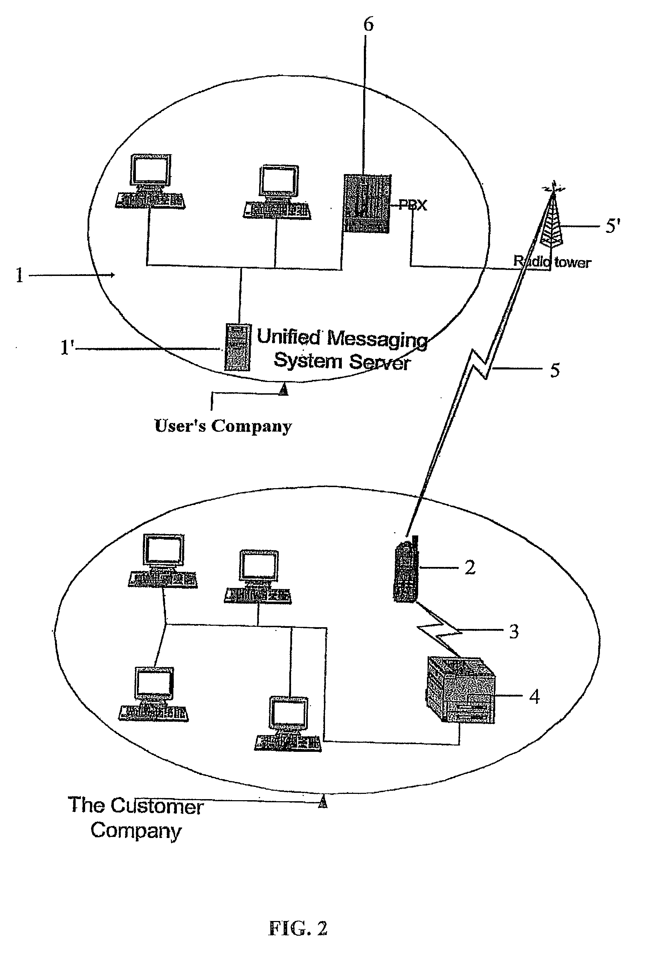

More precisely, and as explained in relation with figure 2, said method may consists in locating a radio compliant editing or display unit 4, contacting said unit 4 through the radio interface of the phone 2 in order to edit or display the concerned message or document, indicating or sending to the Unified Messaging system 1, via the phone 2 and using the GSM/GPRS/UMTS network 5', a format able to be used by said display or editing unit 4, recovering the concerned message or document within the Unified Messaging system 1 and putting it into the requested format if necessary, sending the corresponding data file from the Unified Messaging system 1 to the phone 2 through the GSM/GPRS/UMTS link 5 and from the phone 2 to the display or editing unit 4 through the local radio link 3, and finally displaying or editing said concerned message or document on said unit 4.

Generally the messages or documents are not in a directly editable format, or if so may not be in a format, suitable for unit 1, and the phone 2 thus retrieves from the display or editing unit 4 the editing or display supported format and then sends said format to the Unified Messaging system 1, said system 1 performing the rendering of the concerned message or document in said format and sending the resulting file to the phone 2. The adequate format can, for example, be PDF, PostScript, HPCL5, TIFF or similar.

Preferably, once the message or document to be displayed or edited has been selected in the Unified Messaging system 1, all following operations in order to display or edit it on the chosen unit 4 are automatically and successively executed upon reception of a corresponding order by the phone 2 through its keypad 2'.

According to an advantageous embodiment of the invention, the local radio communication link 3 is of the Bluetooth type, both phone 2 and unit 4 (printer, fax machine, screen, ...) do in this case incorporate Bluetooth interfaces.

Depending on the level of equipment and sophistication of the mobile phone 2, this latter communicates with the Unified Messaging system 1 through its Telephony User Interface (TUI) or through its Wireless Application Protocol (WAP) interface.

Such a TUI interface is, for example, described in European patent application No. 99440255.0 in the name of the present applicant.

In relation with a prefered embodiment of the invention, the message to be displayed or edited consists of an e-mail, possibly with attached files, or a fax received in the subscriber's inbox in the Unified Messaging system 1, the selection of said message being made after browsing through and checking of the newly arrived messages.

In order to fasten the displaying or editing of the fax or e-mail messages, said messages could be prepared in advance so as to be ready for transmission and edition or display.

Thus, upon their reception in the subscriber's inbox in the Unified Messaging system 1, all e-mails and their possible attachement(s), or a copy thereof, are automatically put into a predetermined displayable or editable format.

The present invention also concerns, in view of figure 2, a system for editing or displaying a message or a document stored in a Unified Messaging system 1 server 1', by a subscriber of this latter system, by means of its wireless or cellular phone 2 having a radio interface and GSM, GPRS and/or UMTS communication capacity.

According to the invention, said phone 2 is linked, on the one hand, with a local radio compliant editing or display unit 4 through a local radio communication link 3 and, on the other hand, with the Unified Messaging system server 1' through a GSM/GPRS/UMTS network 5', the message or document to be displayed or edited being transmitted in an adequate format through the two previous links 3 and 5 to said unit 4.

The basic idea of the invention, as can be clearly seen on figure 2, is to use the subscriber's mobile phone 2 as a gateway between the display or editing unit 4 and the GSM/GPRS/UMTS network 5'.

According to a feature of the invention said system applies and makes use of the method for displaying or editing as exposed herein before, the editing unit 4 consisting for example of a printer, a fax machine or a photocopier.

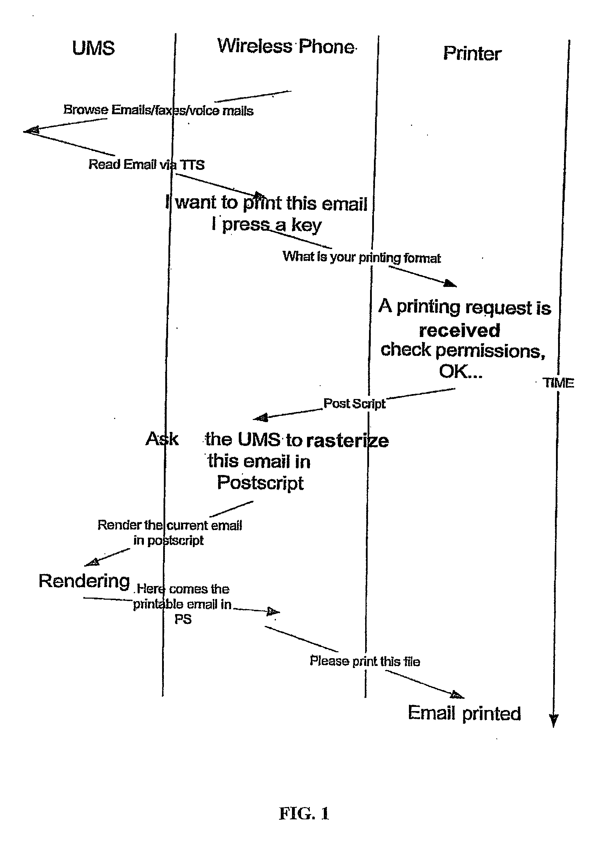

One possible embodiment of the invention will now be described, in relation with figures 1 and 2 of the enclosed drawings, as a non limitative practical example.

As an example, we can consider a UMS 1 subscriber whose activities are split over several sites, through several companies.

With his wireless phone he checks all the new messages he has received : if he has a wireless phone 2 with WAP then he can browse (visually on the screen) his new messages, if he has a standard wireless phone with no or few capabilities to display information then he browses through the Telephone User Interface.

It may be that some of his new messages seem to be very important and consequently he wants to print them.

As his wireless phone 2 has a radio interface (bluetooth) and also a GSM or GPRS or UMTS capability, he asks for a radio compliant printer 4 available close to him.

He locates it by asking people around him. Said printer 4 may be for example a self-service printer dedicated to this use. This printer 4 does not have to be linked to the network 5', it can be a standalone printer.

From his wireless phone 2, the subscriber gives the order to print the current e-mail on the printer 4 that is close to him by pressing a key. Then the phone 2 negociates the suitable printing format via its bluetooth interface.

When the subscriber / user browses his e-mails and faxes with his phone 2, he is linked to the UMS server 5' via a PBX 6. So his phone 2 sends the requested format back to the UMS server 1' using the GSM/GPRS/UMTS network 5'.

Then the UMS server 1' renders the current e-mail in requested format. When the rendering operation is completed, the UMS 1 sends the printable e-mail (as data) back to the phone 2. These data are then sent back by the wireless phone 2 to the printer 4 through the Bluetooth link 3. The printer 4, with no problem, prints the e-mail.

The printing process illustrated on figure 1 is only an example.

It is also possible to envisage a prerendering of the current messages when they are read through TTS (Text To Speech) or WAP in the most widely spread printing format (PDF for example). The phone 2 could then store the current document and its format.

In this latter case, when the user wants to print, if the default format is suitable, the phone 2 directly sends the document to the printer 4. Otherwise phone 2 and printer 4 will negociate the format as explained before.

A major advantage of the inventive solution is that the printer 4 or the display has not to be linked to the network 5'. The Unified messaging system 1 is linked to the printer 4 by the wireless phone 2 that acts as a gateway. This solution could be used from everywhere a "radio compliant printer" is available.

Thus, the user or subscriber is freed from the limits of location.

Further, the inventive solution has also security advantages : the printers or display devices on which the user will print or display your faxes and e-mails could be standalone like a photocopier, without link to the network.

The present invention is, of course, not limited to the preferred embodiment described herein, changes can be made or equivalents used without departing from the scope of the invention.

## Claims

1. Method for editing or displaying a message or a document stored in a Unified Messaging system, by a subscriber of said system using its wireless or cellular phone having a radio interface and GSM, GPRS and/or UMTS communication capacity, **characterised in that** it consists in establishing with said phone (2) a local radio communication link (3) with a radio compliant editing or display unit (4) and a remote communication link (5) with the Unified Messaging system (1) through a GSM/GPRS/UMTS network (5'), transmitting the concerned message or document in an adequate format through the two previous links (3 and 5) to said unit, and displaying or editing said message or document on said unit (4).

2. Method according to claim 1, **characterised in that** it consists more precisely in locating a radio compliant editing or display unit (4), contacting said unit (4) through the radio interface of the phone (2) in order to edit or display the concerned message or document, indicating or sending to the Unified Messaging system (1), via the phone (2) and using the GSM/GPRS/UMTS network (5'), a format able to be used by said display or editing unit (4), recovering the concerned message or document within the Unified Messaging system (1) and putting it into the requested format if necessary, sending the corresponding data file from the Unified Messaging system (1) to the phone (2) through the GSM/GPRS/UMTS link (5) and from the phone (2) to the display or editing unit (4) through the local radio link (3), and finally displaying or editing said concerned message or document on said unit (4).

3. Method according to claim 1 or 2, **characterised in that** the phone (2) retrieves from the display or editing unit (4) the editing or display supported format and then sends said format to the Unified Messaging system (1), said system (1) performing the rendering of the concerned message or document in said format and sending the resulting file to the phone (2).

4. Method according to any of claims 1 to 3, **characterised in that** once the message or document to be displayed or edited has been selected in the Unified Messaging system (1), all following operations in order to display or edit it on the chosen unit (4) are automatically and successively executed upon reception of a corresponding order by the phone (2) through its keypad (2').

5. Method according to any of claims 1 to 4, **characterised in that** the local radio communication link (3) is of the Bluetooth type.

6. Method according to any of claims 1 to 5, **characterised in that** the phone (2) communicates with the Unified Messaging system (1) through its Telephony User Interface (TUI).

7. Method according to any of claims 1 to 5, **characterised in that** the phone (2) communicates with the Unified Messaging system (1) through its Wireless Application Protocol (WAP) interface.

8. Method according to any of claims 1 to 7, **characterised in that** the message to be displayed or edited consists of an e-mail, possibly with attached files, or a fax received in the subscriber's inbox in the Unified Messaging system (1), the selection of said message being made after browsing through and checking of the newly arrived messages.

9. Method according to claim 8, **characterised in that**, upon their reception in the subscriber's inbox in the Unified Messaging system (1), all e-mails and their possible attachement(s), or a copy thereof, are automatically put into a predetermined displayable or editable format.

10. System for editing or displaying a message or a document stored in a Unified Messaging system server, by a subscriber of this latter system, by means of its wireless or cellular phone having a radio interface and GSM, GPRS and/or UMTS communication capacity, **characterised in that** said phone (2) is linked, on the one hand, with a local radio compliant editing or display unit (4) through a local radio communication link (3) and, on the other hand, with the Unified Messaging system server (1') through a GSM/GPRS/UMTS network (5'), the message or document to be displayed or edited being transmitted in an adequate format through the two previous links (3 and 5) to said unit (4).

11. System according to claim 10, **characterised in that** it applies the method according to any of claims 1 to 9.

12. System according to anyone of claims 10 and 11, **characterised in that** the editing unit (4) consists of a printer.
